Europäisches Patentamt

European Patent Office

Office européen des brevets

(11) Publication number: **0 077 304**
A2

# (12) EUROPEAN PATENT APPLICATION

(21) Application number: 82830218.2

(22) Date of filing: 30.07.82

(51) Int. Cl.³: **B 65 G 17/18,** B 65 G 57/14, B 65 G 47/38, B 07 C 5/36

(30) Priority: 05.08.81 IT 4905581
23.06.82 IT 4006682

(43) Date of publication of application: 20.04.83
Bulletin 83/16

(84) Designated Contracting States: DE FR IT NL

(71) Applicant: GOMES S.r.l., 12, Via Ferrari Carazzoli,
I-41042 Fiorano Modenese (IT)

(72) Inventor: Ansaloni, Sergio, 8, Via Faberio,
I-47039 Savignano sul Rubicone (Forli) (IT)
Inventor: Gozzi, Franco, 33, Via Don Luigi Sturzo,
I-41043 Fromigine (Modena) (IT)
Inventor: Mescoli, Giuliano, 14, Via Toscanini,
I-41043 Fromigini (Modena) (IT)

(74) Representative: Gardi, Giuliano, Gardipatent Palazzo
Prora 605, Via Giardini, I-41100 Modena (IT)

(54) Sorting, distributing and stacking machine for ceramic and tile products.

(57) A sorting, distributing and stacking machine for ceramic and tile products includes a paired chain conveyor (7) laid vertically in a closed circuit and inter-connected by transversal articulated bars (13), each carrying in a cantilever position, a series of conveyor arms (14) capable of picking up the products (18) from the specific supply lines (22), synchronized with the conveyor arms, and arriving from the sorting operations. The conveyor arms (14) after having picked up the products (18) from the supply lines (22), distribute them according to the previous selection, on a series of mobile brackets (28-32) along sloped 45° surfaces. Each bracket makes up a product (18) stacking station in which a stack of products, of equal quality is formed and is then picked up by the conveyor arms (14) and directed to the packing or to other operations. These supply lines synchronize the movement of the products (18), with that of the conveyor arms (14) with chains (136) provided with teeth (23), coordinated with pairs of conveyor belts (137, 138) of a different speed.

# Sorting, distributing and stacking machine for ceramic and tile products.

The invention pertains to a sorting, distributing and stacking machine for ceramic and tile products, in other words, it is a group of completely automated mechanical devices that receive pressed or extruded ceramic tiles from the sorting area so that they may be selected according to the sorting grades and stacked for the packing or other operations.

The technical product includes machines made up of a conveyor line with pairs of belt/band, followed by a single stacking line and lateral emptying lines. Such machines, especially in the case of small size products, do not permit a sufficiently high hourly production, nor do they permit the machines to work independently from the sizes. In addition, the changes of direction bring about a loss of stability of the stacks and it results in a product loss, in stoppages and in time waste for the putting back in operation. The dimensions of such machines are also considerable, in comparison with the hourly production they reach. Furthermore, the existence of sensor elements in these machines for the operations procedure control makes frequent and costly maintenances of the machines necessary.

Such past technique is subject to numerous improvements regarding the possibily to modify the flow of the stacks of products so as to avoid deflections of the said elements by the drive director and to obtain an hourly production that is almost constant, independently from the sizes, and to avoid the use of sensors.

From the previous results comes the necessity to resolve the technical problem of discovering a sorting, distributing and stacking machine that has a high hourly production, is compact and free from sensors and that receives the sorting product on one or more lines or that is made up of a conveyor that not only transfers and distributes the products in the various areas according to their quality, but also stacks them and carries them on to the same lines until their emptying into the packagings.

The techical problem is solved by adopting a completely synchronized and automatic machine, equipped with product supply lines mainly composed of a couple of back chains with product traction teeth, preceeded by a couple of horizontal, longitudinal, elastically articulated supports that are hinged on the back side to the machine frame.

Each oscillating support is designed with a stop tooth at the back of the product element in order to synchronize it with the teeth of the couple of back chains. The support is stopped by a lever controlled by the teeth of the chain couple as it lowers the back end of the horizontal couple of supports, thus lowering the end teeth of the same supports. The same shaft that drives the back couple of toothed wheels of the chain couple also drives the two couples of side conveyor belts, one stretched to the back, with the top branch slightly lifed as compared to the surface of the couple of articulated supports. The other belt is stretched to the front, toward the front end area of the following moving conveyor arms, further raised as compared to the couple of chains a height of about half the thickness of the product. This later couple of belts has a greater diameter, while the first couple of belts have a diameter that varies between the greatest diameter, and that of the couple of toothed wheels of the chain conveyor line which is the smallest of the three diameters.

The machine is also equipped with a twin chain conveyor that raises, thanks to a series of arms that are hinged to the chains and are guided bilaterally in a closed circuit, the individual conveyed products from the supply lines coming from the sorting area, even on more lines and rows. The conveyor, after having picked up the products from the supply lines, sets the products down, distributing them according to the established criteria, on mobile brackets along the sloping section which is part of the related stacking stations within the conveyor itself.

The stacks of tiles which have accumulated on the respective brackets are picked up by the conveyor, which supports them from the bottom, and directs them towards the packaging and

0077304

other operations. Each series of mobile arms and the respective mobile brackets are positioned crosswise on two transversal bars. The first is supported by the couple of conveyor chains and the second by the machine frame in order to adjust to the sizes and to the consequent number of the flow lines of the products. According to the invention, every series made up of arms covers an area greater than a multiple of the largest size, for example, using the 0,5 m x 0,5 m size as model.

In the case of smaller sizes, the lines and the rows of products picked up by each series of arms, which is able to receive the above mentioned size that is used as model, will increase.

These are the advantages which can be drawn from this invention: greater hourly production, smaller space, smaller maintenance requirements and a greater operating reliability, greater compactness, adaptability to a large number of sizes with an hourly production that is almost constant, smaller cost for the installation per square meter of product.

The invention is illustrated, in order to provide examples, in the fourteen tables of drawings that are attached.

Figure 1 is a schematic side view of the entire machine in operation.

Figure 2 is a shematic side view like Figure 1, which serves to highlight, for one, the guides of the run of the hinged series of arms.

Figure 3 is a schematic and uninterrupted view of the plan of Figure 1.

Figure 4 is the enlarged vertical crosswise view of section IV-IV of Figure 1.

Figure 5 is a schematic side view of the tile ranging device in the stacking cycle.

Figure 6 is the enlarged side view of section VI-VI of Figure 5.

Figure 7 is the vertical longitudinal view of section VII-VII of Figure 3.

Figure 8 is the vertical longitudinal view of section VIII-VIII of Figure 3, which serves to highlight the stacking device.

Figure 9 is the horizontal crosswise enlarged view of section IX-IX of Figure 8, which serves to highlight the descent and the reclimb of the brackets.

Figure 10 is a raised schematic view of the drive transmission to the supply lines, in accordance with the expedient.

Figure 11 is a partial or partially sectioned view of the plan of the supply lines in accordance with the expedient.

Figure 12 is the vertical longitudinal view of section XII-XII of Figure 11.

Figure 13 is the vertical longitudinal view of section XIII-XIII of figure 11.

Figure 14 is a view similar to Figure 5 of the tile ranging device in the stacking cycle, in which the truncated-cone washers inserted at the end of the articulated arms 92 are replaced by     rollers.

Figure 15 is a section similar to Figure 7, which serves to highlight a second version of the stacking device and which is less convenient than the first.

Figure 16 is the view of section XVI-XVI of Figure 15.

The numbered elements designate the following:

1 is the bed-plate of the machine from which rise the twin middle lateral supports 2, which are slanted to the front in the direction of the product drive. The twin middle lateral supports are interposed, at a constant interval, between the twin inlet head supports 3 and the twin outlet supports 4 which are slanted at a convenient 45° angle parallel to the supports 2.

The twin middle lateral supports 2 are of the same number as the forming stations of the stack rows 5, that is as many stations as are designed to receive products of different types and tones. Every couple holds the devices that are related to a station.

6 indicates a couple of upper body sides which link the upper ends of supports 2, 3, 4. 7 indicates a couple of chains placed on two vertical planes and driven by the motovariator 8, which drives the entire machine. The couple

- 5 -                                    0077304

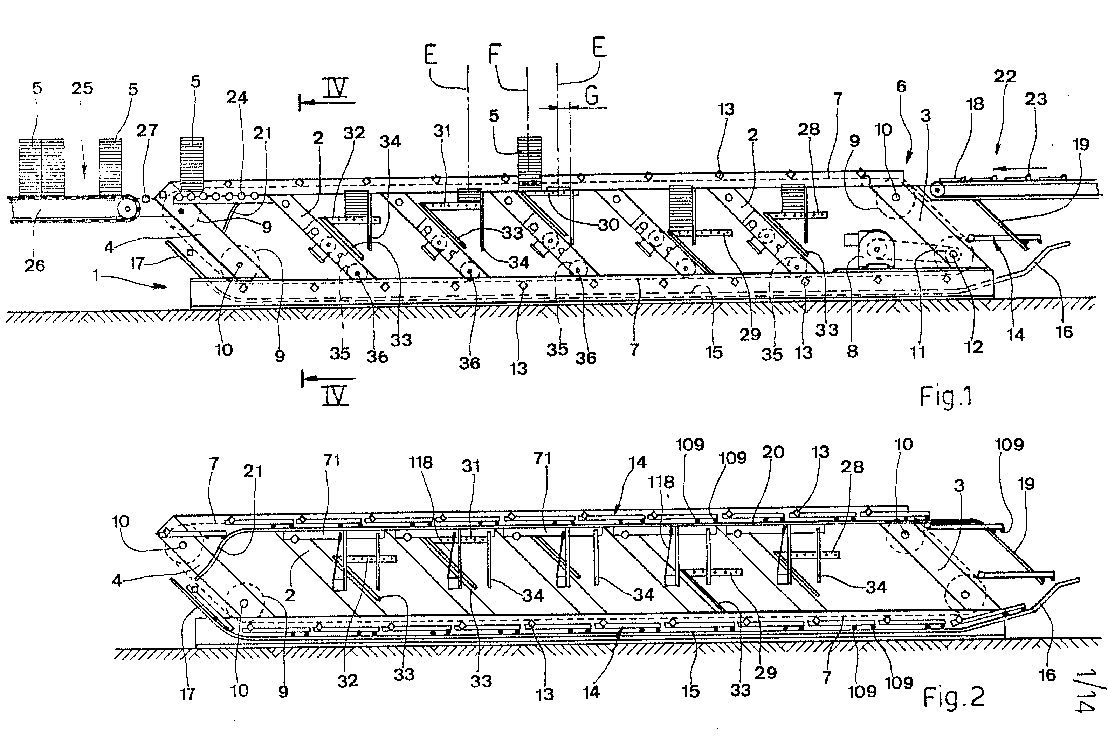

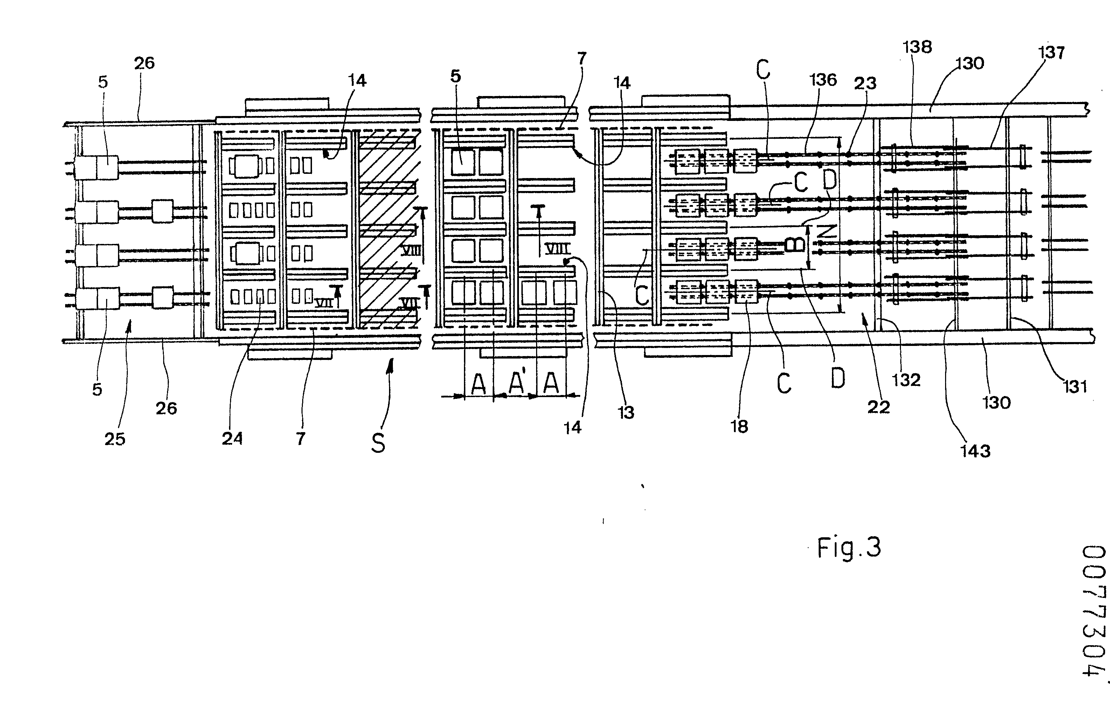

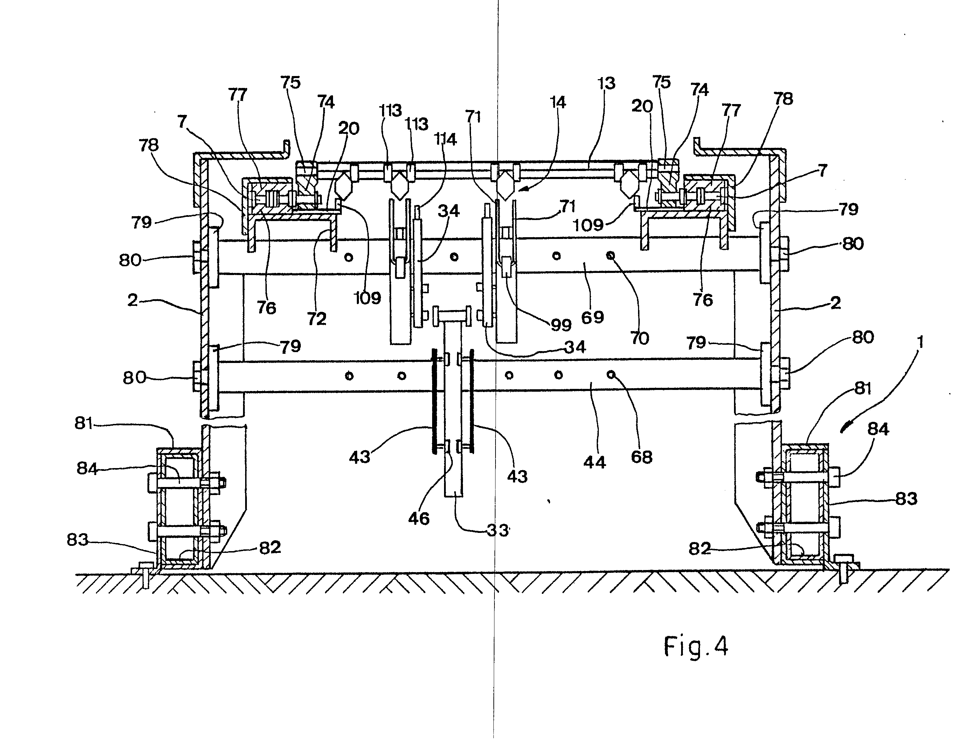

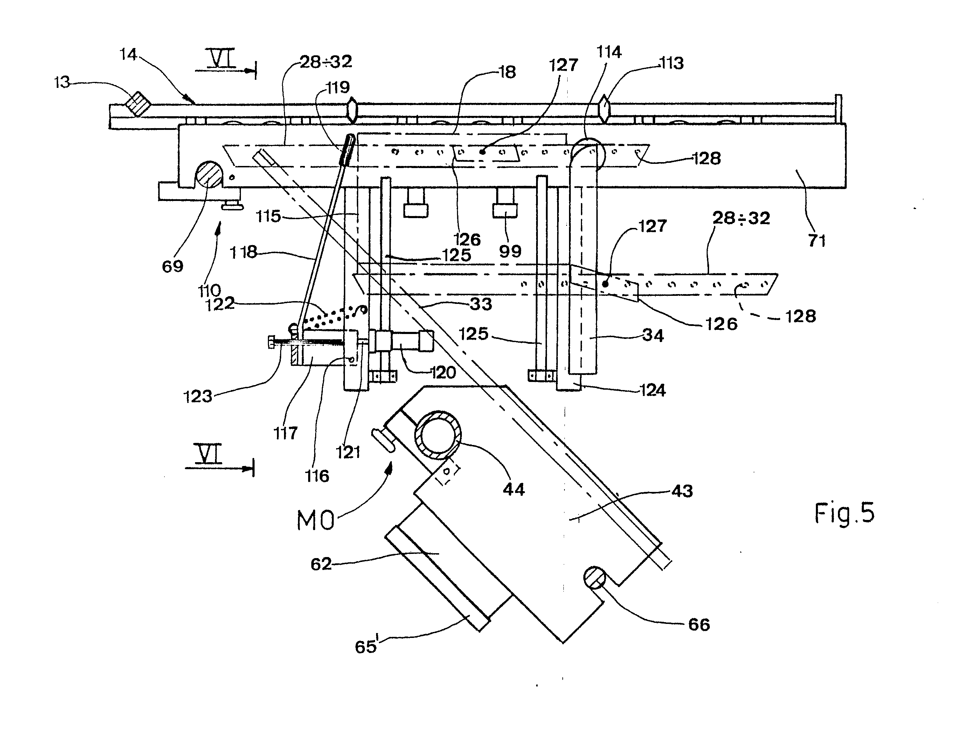

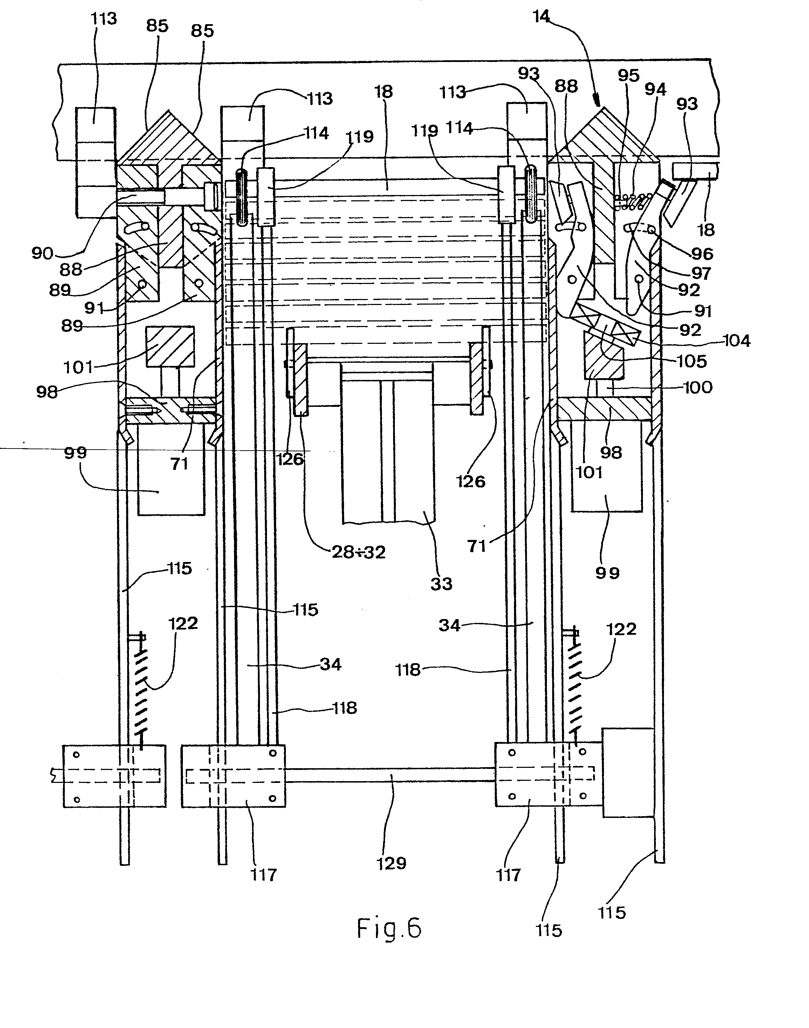

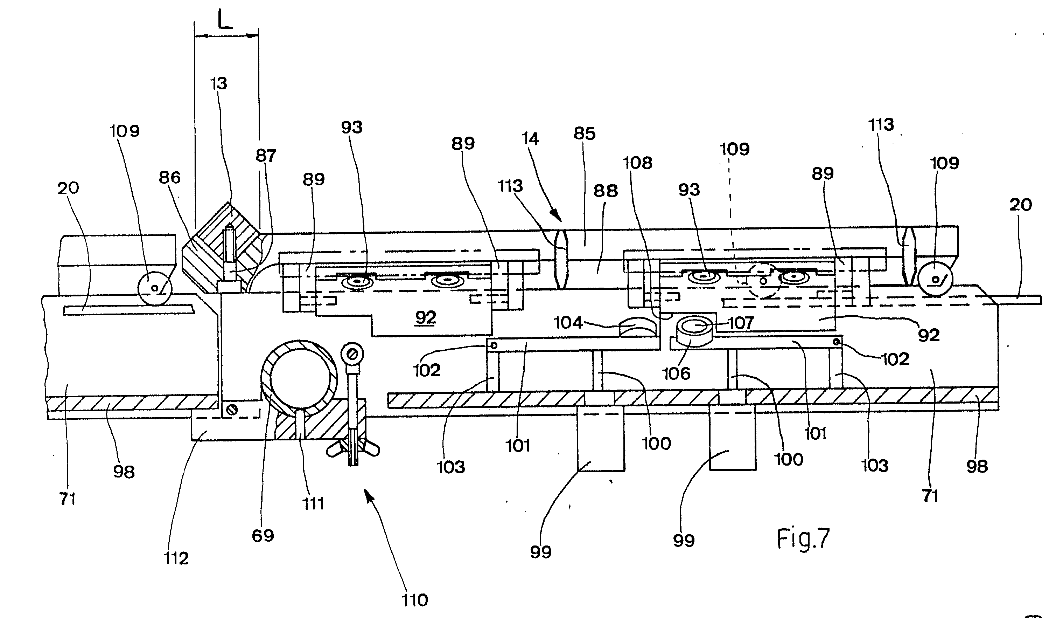

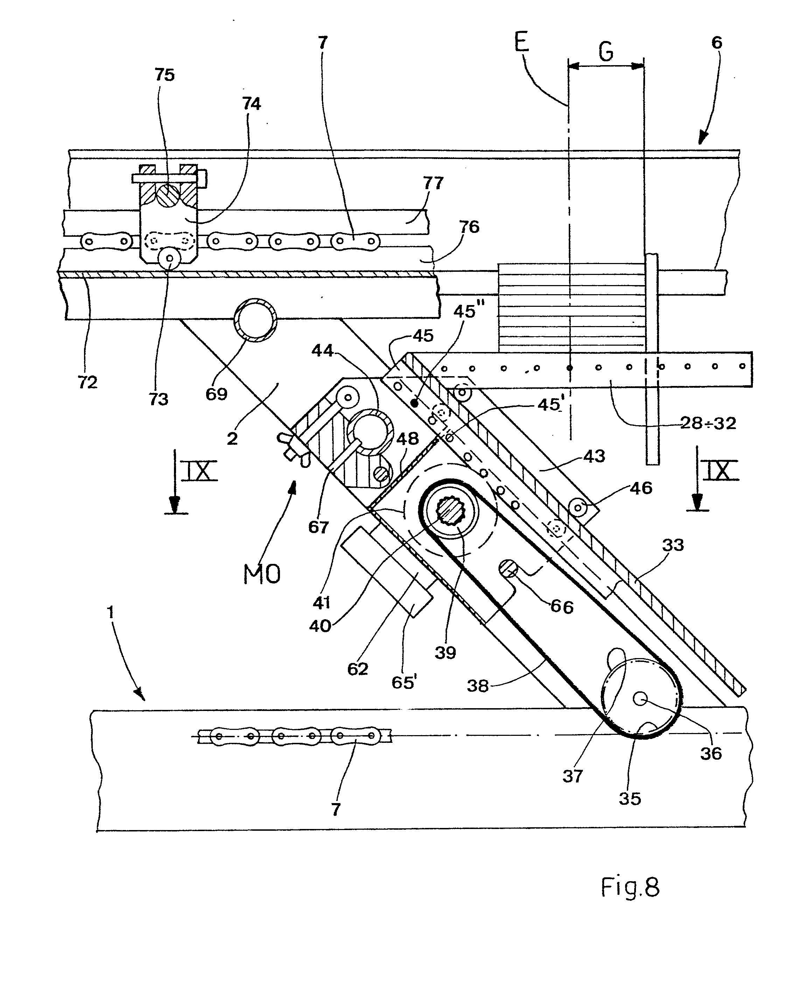

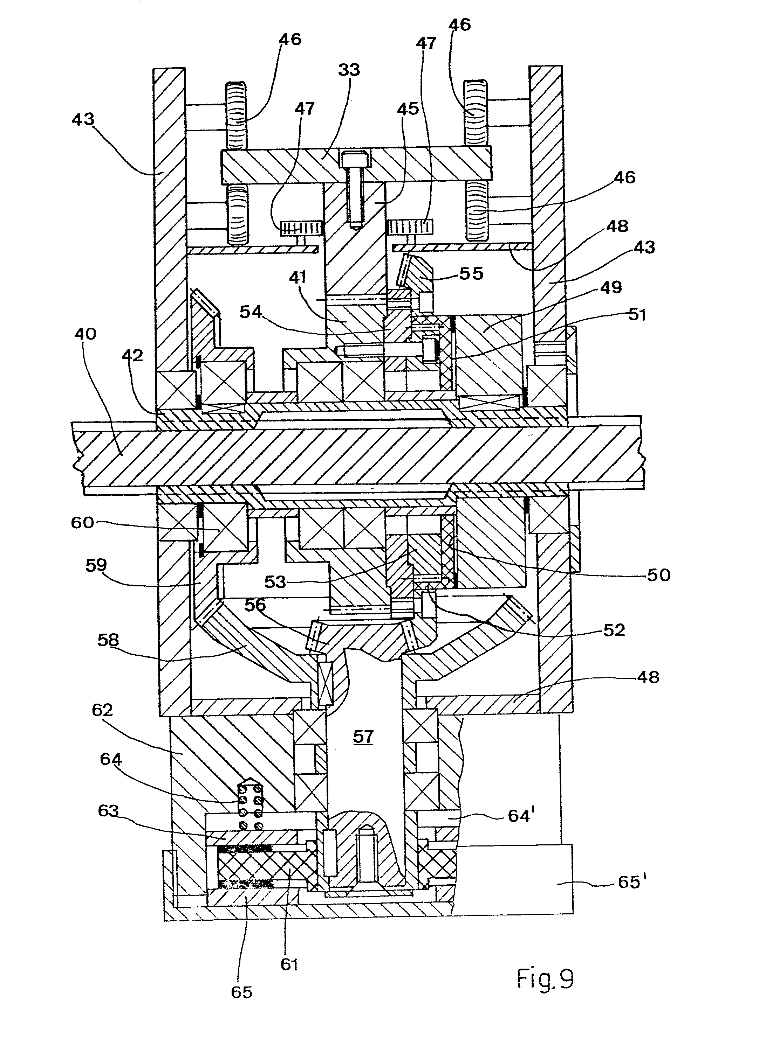

of chains 7 are drawn by the couple of idle toothed wheels 9, positioned on their respective horizontal pins 10, to the supports 3 and 4, and are controlled by a couple of pulleys 11 which are closefitted on the lower shaft 12 which rotates within the couple of inlet supports 3. 13 indicates transversal prismatic-sectioned bars whose ends are hinged to the couple of chains 7 at a constant interval. On each hinged transversal bar 13, a series of conveyor arms 14, which are prismatically sectioned, are supported in a cantilever position. There are as many as the rows of products plus one more. The conveyor arms 14 are spaced at a distance B (Figure 3) which is equal to the total width of the product size plus the width of the conveyor arm. The group of arms 14 is hinged vertically as compared to the chains 7. The outer couple of arms 14 is held in a sliding lower position by a couple of guides 15 along the lower part of the run, by a couple of guides 16 and 17 along the initial section of the climb towards the product 18 supply, and along the final section of the descent towards the lower couple of guides 15. The couple of guides 16 are profiled with three consecutive sections which are laid out in an "S" shape to allow the continuous passage from the guides 16 to the rectilinear guides 19 along the last section of the climb. 20 indicates a couple of guides for the upper part of the run and 21 represents a couple of guides along the initial section of the descent of the series of mentioned arms. 22 indicates the product supply lines having their front part comprised between the couple of arms 14. The back part of the lines are composed of a couple of longitudinal chains with driving teeth 23. The couple of longitudinal chains 24 or of rollers are inserted in the last part of the product run, between the last couple of middle supports 2 and the couple of head supports 4. The pitch between the supports 2 is constant. 25 indicates a roller conveyor or a roller plane or a similar conveyor, which is held by a couple of side arms 26 to the outlet head supports 4. A cross roller 27 is interposed between the end of the roller lines 24 and the beginning of the roller conveyor 25, which eventually can be moved horizontally, by an automatic control and in synchronism with the passage of every hinged bar 13, from the upper branch to the lower one of the couple of chains 7. This allows the passage of every mentioned bar. The roller, if mobile, avances as a result of the passage of every bar in order to join in the support of every stack 5. 28, 29, 30, 31 and 32 indicate the independent series of brackets which are equal in number to the product stacks, and which are distributed crosswise as to result aligned with the C axis of each row of products to maintain the forming of stacks 5. Each series of brackets makes up a stacking section for the same type of product. Each bracket is fastened to the top of the sloped plate 33 which slides along the sloped surface of middle supports 2 with the same inclination and it is stretched horizontally towards the back. 34 indicates vertical counterbalance elements directed towards the bottom part and fastened at the top to longitudinal elements that are fixed and longitudinally distanced at a pitch equal to that of the supports 2. The elements are positioned crosswise along each longitudinal D axes in the space which exists between each row of product stacks 18. The elements 34 act as pushers; they are fastened near the end of the back edge of the products 18 which make up the stack. During their descent they are sloped at the back of the mentioned brackets in order to move the stack forward onto the appropriate bracket. The letter "E" indicates the     vertical stack-forming axis of the stack 5. The value "F" cannot be higher than the value "A" for the interval of the product rows. This is so because of the 45° slope which is used in the supports 2. It is to be underlined that the A' pitch between two rows of products 18 which are located on the hinged transversal bar 13 is greater than the A pitch which exists between the elements of two, three or four rows laid out on the same series of arms 14, for a length that is at least equal to the width "L" of the mentioned bar. The letter "G" indicates the distance from the vertical axis "E" to the counterbalance element 34 that preceeds it, that is equal to one half of the longitudinal side of the tile 18. 35 (Figure 8, 9) indicates a couple of toothed wheels, each closefitted to a shaft 36 that rotates as it is mounted in the lower part to each of the couple of middle supports 2. Each toothed wheel 35 is geared to the chain 7 below it in order to transmit the drive, through a toothed pulley 37, a toothed belt 38 and other toothed pulleys 39, to the splined shaft 40, which rotates within the mounting of the couple of middle supports 2, in order to trasmit the sloped drive of the climb and the descent to the numbered brackets 28 to 32. 41 indicates an idle-mounted toothed wheel in the central position on the splined tube 42, which is transversally adjustable on the splined shaft 40 and which rotates within the mounting of the couple of body sides 43, fastened with MO clamps on the cylindrical cross member 44 of the couple of supports 2. A rack 45, geared with the toothed wheel 41 is fixed onto the lower face of the sloped plate 33 which is provided with a series of transversal perforations 45', destined to receive a peg 45" that works as a stop at the end of the downward run. 46 indicates roller couples that are mounted on the body sides 43 and that serve in the sliding of the related plate 33 in between the couples. 47 indicates the roller couples that are mounted on the casing 48 which interconnects the body sides 43 and which constitutes the stop for the end of the lower run of the rack 45. 49 indicates the fixed, magnetizable body of an electro-magnetic clutch paired with a front toothed surface 50. 51 is made axially movable by the electro-magnet 49. On the back it is provided with a band 52 and on the inside it is provided with teeth for the toothed coupling with the ring 53. This ring is fixed on the back of the idle-mounted toothed wheel 41 with the disc 54 peripherally carried by the lower ring bevel gear. Between the teeth of the disc 52 and those of the ring 53, there is a peripheral clearance that allows; at the moment of the gearing, a delay of a few degrees, for example 7°, that allows the complete coupling of the teeth before the drive effort without having to stop the drive. A couple of springs, not shown, keep nul the clearance in the rest position. 56 indicates a bevel gear at the end of the auxiliary shaft that passes through the casing 48 and is geared with the ring bevel gear 55. 58 indicates a bevel gear that is close fitted on the outside of the shaft 57, on the same axis as the bevel gear 59 mounted on the free-wheel 60, whose inside ring is fixed to the splined metal tube 42. 61 indicates the disc of a brake that is close fitted to the other end of the shaft 57 and is slidable axially along the shaft. 62 indicates a cylindrical ferromagnetic body induced by a coil that is not shown; the body attracts the disc 63 to the movement of the peripheral springs 64 in order to unblock the disc braking 61 that presses against the disc 65, which is adjustable thanks to a lid 65 that is screwed to the cylindrical end of the body 62. The shaft 57 is mounted on a slide bearing body 62, and in its turn the latter is fixed to the casing 48. The discs 61, 63, 65 are inserted in the cylindrical cam mechanism 64' of the magnetized body 62. The disc 61 is close fitted to the end of the shaft 57. 66 indicates a cross member for couple of middle supports 2 in order to support each body side 43 in the particular lower notch of the same. 67 indicates a peg that is inserted in the MO clamp in order to penetrate into one of the perforations 68 (Figure 4) of the series of perforations in the cylindrical cross member 44. The series of perforations are designed to determine the transversal position of the couple of flanks 43 and therefore that of each bracket numbered beween 28 and 32, according to the transversal dimensions of the products 18. Each perforation is transversally spaced according to "B", that is, according to the transversal pitch in the lines of products 18, and is ranged on each "C" axis (of the same lines). In this way it can adjust to the changes in size and therefore to a different number of product 18 rows. 69 indicates a cylindrical cross member similar to the cross member 44, also provided with a series of perforations 70 that are transversally spaced according to "B", that is according to the interval of the product 18 lines. They are ranged on each "D" axis, that is, on the axis in the middle of the couple of lines mentioned above. In this way they are able to adjust to the size variations of the side guide elements (Figure 2,4) for the products 18 in the stacking process. Each of these elements is made up of a couple of vertical longitudinal sheets interconnected with transversal spacers that are mounted on the back to the mentioned cylindrical cross member 69. 72 indicates longitudinal members with an upside down "U" section which rests on the cross member 69 to support the upper branch of the couple of chains 7 along its upper outer surface and, along the upper inner surface of the chains, the horizontal section of the couple of guides 20. The couple of rollers 73 (Figure 8) roll on the guides 20 and are mounted on the couple of vertical elements 74 which are fixed on the inner side of the mentioned couple of chains, mounted on roller bearings to the cylindrical ends 75 of the transversal bars 13. 76 and 77 indicate respectively a lower and upper couple of guides made of plastic material for the couple of chains 7. The upper guide 77 is kept pressed to the chain 7 by longitudinal angle irons 78 which are fixed laterally to the couple of longitudinal members 72. 79 indicates the end flanges of the cross members 44 and 69 which act as support surfaces against the inner surfaces of the pair of middle supports 2. 80 indicates end fixing screws for the cross members 44 and 69. A pair of longitudinal elements 81 with a "C" profile extend laterally from the lower part of supports 2, 3, 4. The pair is fixed to a couple of tubular longitudinal members 82 by plates 83 and bolts 84 and makes up the bed-plate 1. 85 (Figure 6, 7) indicates a pair of longitudinal slopes which make up the upper surface of each arm 14 of articulated bar 13, emerging from a fixing head 86 of the same arm towards the aforementioned bar and held in place by screws 87. 88 indicates the longitudinal core of each arms, situated in the middle and underneath the pairs of slopes. Four pairs of dolly blocks 89, placed at a longitudinally equal distance and fixed with screws 90 to the core flanks 88, support thanks to four pairs of longitudinal pins 91, two pairs of transversally articulated bearings 92 with profiled section. Each bearing is provided at the top with a pair of conical washers 93 which emerge from the upper surface of the same bearing, designed to carry, with horizontal upper generators, the side lower edges of the products 18 and their stacks 5. A pair of springs 94 which face each other is inserted in a pair of pegs 95, projecting laterally from the core 88, keep the pairs of washers 93 of the articulated bearing jutting to the outside, a little beyond the plan view of the pair of slopes 85. A longitudinal peg 96 which protrudes from the head of each articulated bearing 92 is on a sliding mounting in an arched slot 97 which limits the angular articulation of the same bearing, derived from the corrisponding head of each dolly block 89. 98 indicates a flat horizontal element (Figure 6, 7) which interconnects and spaces the pair of vertical sheets that make up each longitudinal element 71 of the lateral guide of the products. This element carries, on its lower part, a pair of pneumatic operator cylinder 99, whose shanks 100 act from below on the longitudinal levers 101. The levers 101 are hinged to the pins 102 at the upper end of the support columns 103, fixed at the bottom to the flat element 98. 104 indicates a roller with a pin 105 fixed to the end of one of the levers 101. It is sloped transversally towards one of the articulated bearings 92 in order to avoid any interference with the lower end of the levers. 106 indicates a roller similar to 104, which preceeds the latter in the drive direction. Its pin is sloped on the opposite side of the pin 105 to avoid interference with the lower end of the other articulated bearing 92. The articulated bearing 92 which is particular to roller 106 is provided with a notch 108 in order to allow the simultaneous opening towards the outside of the two bearings, if the cylinders 99 nearby are simultaneously actioned in the same direction. 109 indicates a pair of rollers with an end that is smaller than each side arm 14 which are made to roll on the guides 15, 16, 17, 19, 20, 21. 110 indicates a clamp that blocks the guide elements 71 for the products 18 with the cylindrical cross member 69, in the position determined by the peg 111 which enters into one of the perforations 70 of the same cross member. A front tailpiece 112 of the clamp 110 carries the end of the flat element 98 joined to the pair of sheets which makes up the following element of the side guide 71. The letter "S" (sketched in Figure 3) indicates the single load surface of the machine, determined longitudinally by the pitch of the articulated cross member 13 and transversally by the center distance "N" between the two end arm 14 in the particular series fixed to the cross member. Adjustable boundary elements 113 (Figure 5, 6) of the station are fixed bilaterally on each arm 14, longitudinally distanced a space that is slightly greater than the length of the product 18. The elements 113 are provided with stress raisers at the top and at the bottom. 114 indicates an upper end roller for each counter-balance elements 34 in order to facilitate the feeding of the product in the descending section. 115 indicates the lower front tailpeice of each guide elements 71 of the products 18 which carries, thanks to the hinge 116, the bearing 117 provided with an upper rod 118, tilted towards the back, whose knob 119 serves to push against the front edge the tile 18 that begins to descend in order to range the tiles against the roller 114 or against the counterbalance 34. 120 indicates a pneumatic operator cylinder particular to each tailpiece 115, whose shank 121 acts to rotate towards the bottom the bearing 117, against the spring 122 action. A screw 123 acts as a stop for the front downward run of the bearing 117. 124 indicates the lower back tailpiece of each guide element 71 that carries the particular counterbalance 34. Two vertical elastic foils 125 are supported from the bottom by the lower tailpiece 115 and 124 of the elements 71 in order to laterally range the products 18 in the forming of the stack 5. 126 indicates a pair of elements with a limited articulation which pivot in the pin 127, sideways from each bracket numbered from 28 to 32 in order to maintain the position of the stack 5, when compared to its particular bracket during the reclimb, behind that of the bracket. 128 indicates the perforations of the brackets from 28 to 32 which serve to insert the pin 127 according to the length of the product size. A cross member 129 connects the pair of bearings 117 to the side of the forming stack 5. 130 (Figure 3) indicates a pair of flanks of the product 18 supply device, connected between them by the cross members 131 and 132.

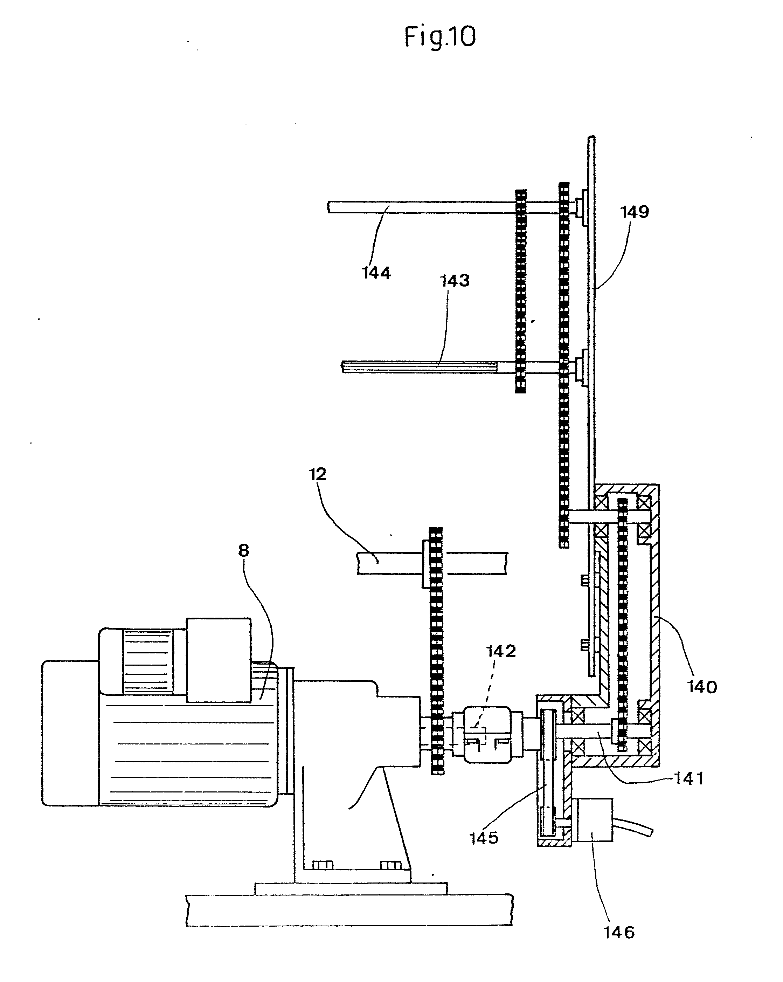

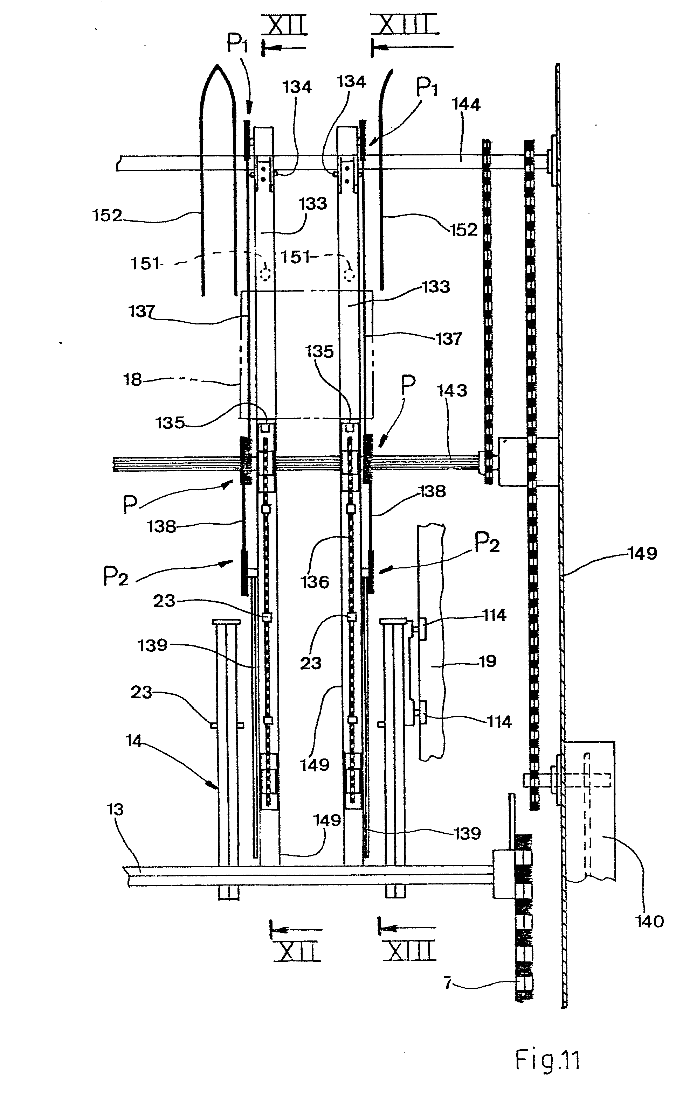

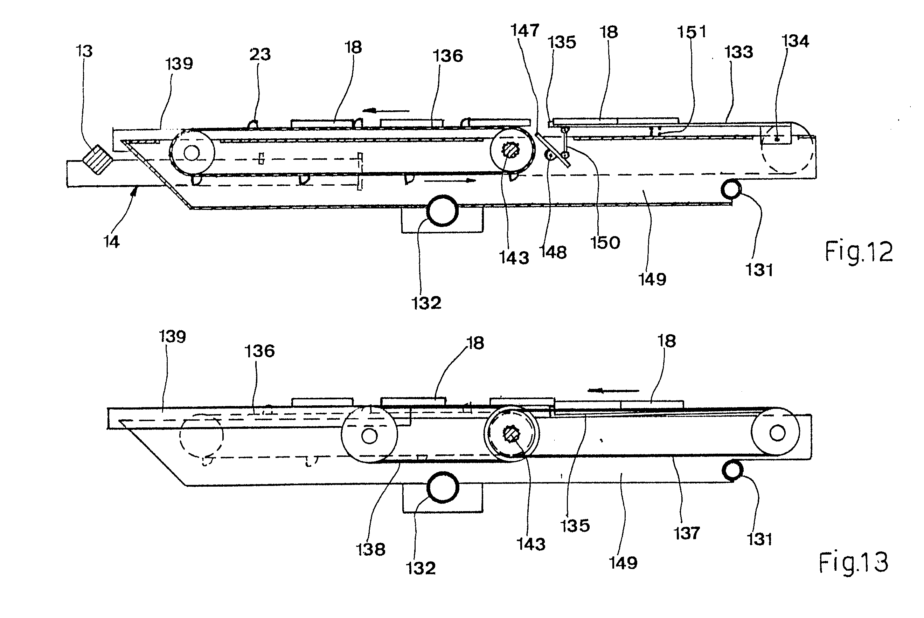

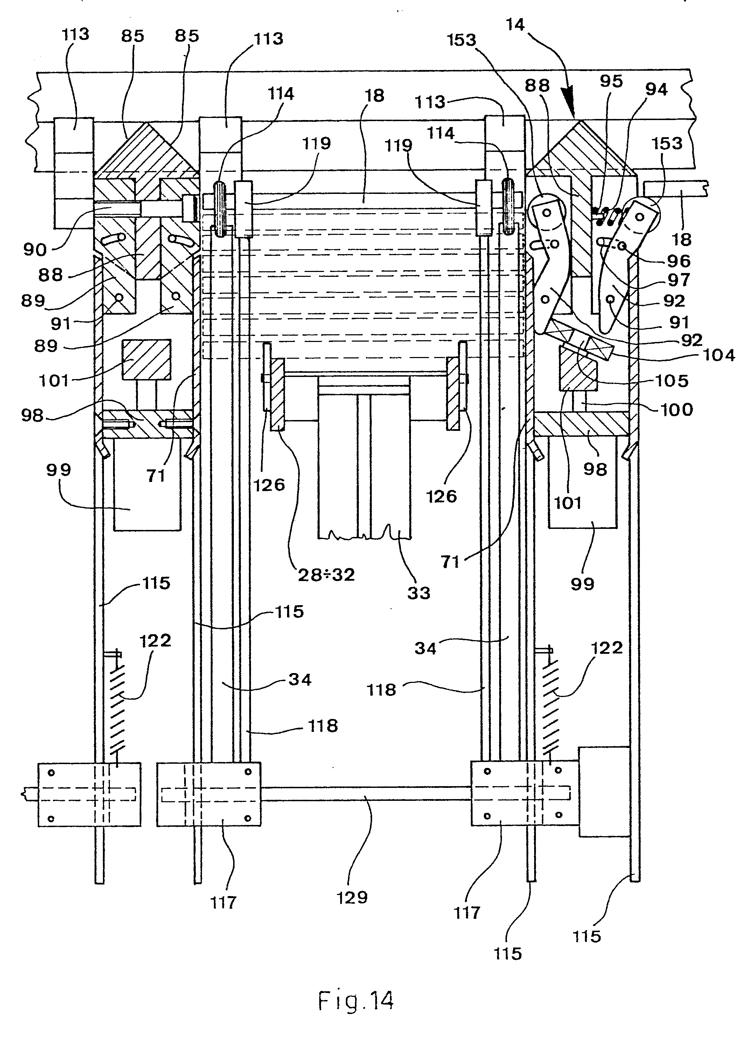

133 (Figure 11, 12, 13) indicates a pair of horizontal longitudinally-elastic bearings that are articulated and that are hinged to the back axle 134 of the frame in order to synchronize the tiles 18 which arrive on a conveyor line (not shown), with the drive teeth 23 distributed along the pair of supply chains 136. The pitch of the teeth 23 can adopt a scope of sequences according to the pitches A and A' of the tile rows on the series of arms 14. 137 indicates a pair of conveyor belts for the products 18 astride the pair of elastically-articulated longitudinal bearings; it is rolled to the back around a pair of double pulleys "P", transversally adjustable on the splined shaft so as to adjust to the size of the products themself. The pair of belts is stretched toward the back and is returned by the pair of back pulleys P1, mounted on the back flanks, to the elastically articulated bearings. The top stem of the same pair of belts is slightly overelevated as compared to the surface of such bearings and to the pair of chains 136. 138 indicates another pair of conveyor belts for the products 18 rolled to the back around the pair of double pulleys "P", stretched to the front astride the section of chain pair 136, returned to the front by the pair of back pulley P2, mounted on the tubular frame 149 of the supply device, whose superior stem is overelevated a space equal to about half of the product thickness. This allows the pair of teeth 135 of the pair of elastically-articulated pair of bearings 133 to stop the product element 18 which follows, while the product element 18 that preceeds it continues to finally cling to the back band of the pair of teeth 23, located at the front. The element clings to the band on its front edge. This clinging is the effect of the speed of the pair of belts 137, 138 that is greater than the speed of the pair of chains 136. 139 indicates a pair of side ledges that are fixed to the pair of chains 136, which are found at the same level as the top face of the superior stem of the pair of belts 138, and therefore, higher than the mentioned chains. The pair of ledges begin at the front end of the pair of belts 138 and continues to the section between the pair of arms 14, while the pair of belts 138 ends before the end section of the same arms. The pair of ledges 139 slows down the speed of the product element 18 in such a way that the front edge comes into contact with the front face of the pair of teeth 23, located to the back. 140 (Figure 10) indicates a transmission box that transmits the drive from the shaft 141, linearly connected to the outlet shaft 142 of the motovariator 8, to the splined shaft 143 on which is coupled the pair of double pulleys "P" that are wrapped within the pair of conveyor belts 137 and 138 and the pair of traction toothed wheels of the pair of chains 136, provided with drive teeth 23, particular to each element that makes up one of the supply lines 22 for the conveying of a row of products 18. 144 indicates a layshaft for the drive from the motovariator 8 to the shaft 143. 145 indicates a drive from the shaft 141 to the impulse generator 146 that detects the movements of the parts of the entire machine. 147 indicates a pair of levers 148 whose fulcrum is the tubular type frame 149. The levers carries the group of supply lines 22. A pair of connecting rods 150 join the back lever end 147 with the pair of on top bearings 133. 151 indicates a pair of springs found between the tubular frame 149 of the supply device and the pair of articulated bearings 133 on top. 152 indicates the edges of the product 18 guide, at the coupling of the belts 137. 153 (Figure 14) indicates a pair of rollers that can be inserted on the upper end of each articulated bearings 92, instead of the conical washers 93, in order to support the side lower edges of the products

- 14 -

0077304

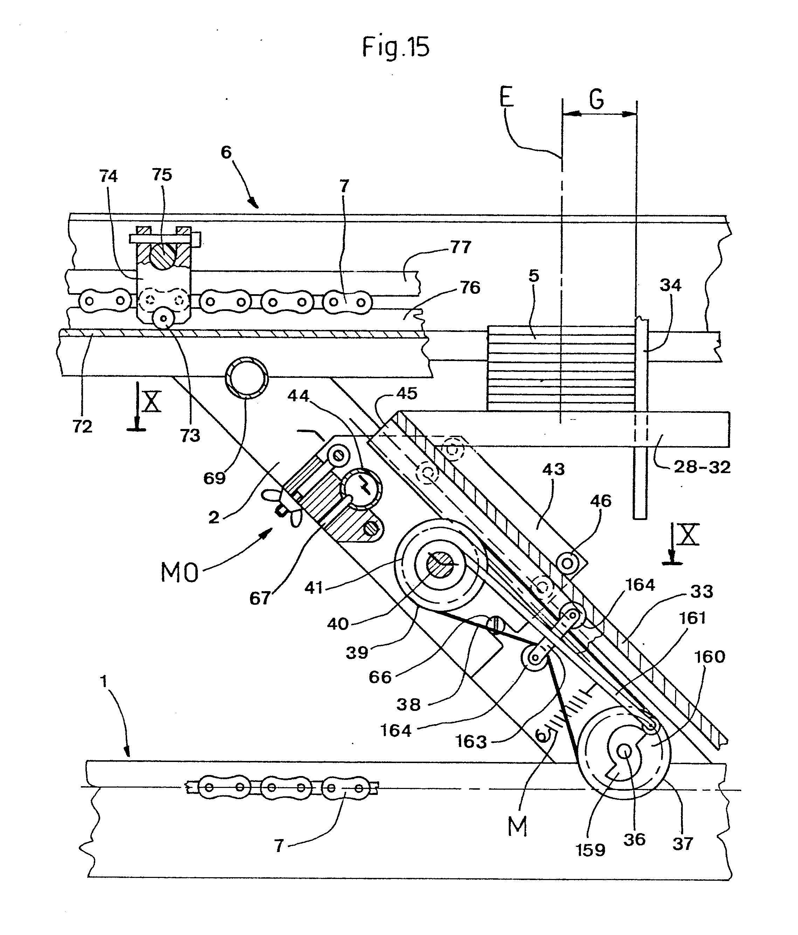

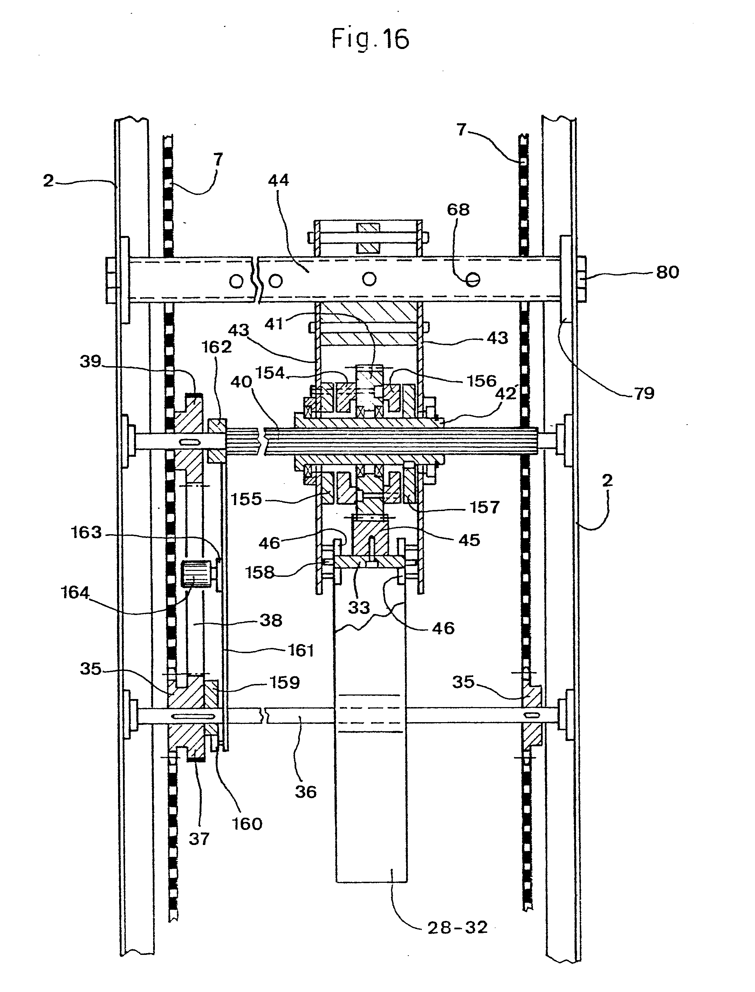

18 and their stacks 5, what is more, with a smaller tollerance on the product width. Figure 15 and 16 illustrate a variation of the descent and reclimb device of the brackets 28-32 of the stacking stations of the products. The variation basically presents a discontinuance in the drive reversal. 154, 155, 156, and 157 (Figure 16) indicate the facing parts of two electro-magnetic clutches: part 155 is fixed to the respective flank 43, parts 156-154 are fixed sidewise to the toothed wheel 41, part 157 is close-fitted to the splined tube 42. It is to be noted that the parts 154 and 155 are always connected between them and that they disconnect on electric control. 158 indicates two pairs of side guide rollers for the plate 33, whose pins are fixed to the flanks 43. 159 indicates a double protrusion cam, with the protrusions facing each other, as if forming an "S", which is close-fitted on the shaft 36. A roller 160 is kept in contact with the cam 159 by an "M" spring. This roller is mounted on the lower end of the arm 161, whose upper end is fixed to the idle collar 162 on the shaft 40. 163 indicates a bearing fixed in a middle position of the arm 161. The bearing is provided with a pair of rollers 164 that can variate, during the articulation of the arm, the tension of the belt 38 from the traction branch to that of the reversal, thus obtaining a slowing-down of the shaft 40, enough to connect the clutch 156, 157 and to disconnect the clutch 154, 155. According to the invention, the machine operates in the following manner: from the rest stage, in which all the series of brackets from 28 to 32 occupy their highest position in the stacking phase, the machine proceeds onto the operating stage with the start of the pair of chains 7 and the supply line 22 which transports the different types of products 7, yet suitably codified and distributed, in rows parallel to the axle "C". On each single surface "S", according to the size, a minimum of only one product element 18 to two elements on two lines, to four elements on two lines and two rows, to eight elements on four lines and two rows, to even a greater number of product elements can be distributed, as is shown, for example, on Figure 3.
The series of conveyor arms 14, situated in front, horizontal position with respect to the product 18, picks up from
the supply line 22, the products of the same size, but of
different types of the necessary quantity to be used on
the "S" surface. The single products found between the pairs
of boundary elements 113 of a pair of contiguous arms 14
are bilaterally supported by the pairs of arms themselves.
The distribution of the products, according to the quality,
in the different stacking stations is carried out by controlling, according to the code adopted for the quality,
the respective pair of cylinders 99 that raise the corresponding pairs of sloped rollers 104 and 106 to call back
the respective pairs of articulated bearings 92 in motion,
thus determining the return of the respective pair of conical washers 93 or rollers 153 with a consequent freeing
of the product 18 on the surface of a bracket below, for
example that of station 28. After receiving the product
18, the brackets lower to a pitch equivalent to the width
of the product itself as a result of a timer control provided by a programming device that induces the brake coil
with ferro-magnetic body 62. The disc 63 is thus drawn
against the action of the springs 64, freeing the shaft
57 in order to allow the rack 45 to pull down as a result
of the gravity and rotates the toothed wheel 41 that transmits the drive to the toothed wheels 55, 56, 58, 59 with
drive reversal of the wheel 59, as opposed to wheel 55.
The wheel 59 therefore seems to match the shaft 40, and
the wheel is maintained at the same speed thanks to the
free wheel 60 with a possibility of controlling and checking the pitch drop. The products 18 which remain on the
conical washers 93 or on the rollers 153 of the other
articulated bearings 92, continue their run on the pairs
of such washers and rollers up until the stations or station to which it is destined. The conveyor arms 14, of the
same line which follows the first, continues to pick up
the series of products 18, and distributes them to the
various brackets 28 to 32. As a stack 5 is formed on each bracket, the drop of the pitch of the bracket along the direction of the slop of the pair of middle bearings 2 determines first the closing in then the sliding of the back edge of the products against the pair of respective counter-balance elements 34, which determine the passage of the formign stack 5 on them. When only one product element is needed for the completion of the stack, the rack 45 continues to drop, up to the peg 45", inserted in a perforation of the 45' series near the casing 48, does not reach the stop formed by the casing itself. The coil of the body 62 continues to be induced at the arrival on the pair of arms 14 of the last product element 18 which can complete the stack. Even the magnetizable body 49 is induced thus obtaining the clutch of the toothed disc 50, 51 with one another, and with the subsequent drive of the idle wheel 41 by the ring bevel gear 52 and ther ring 53, 54. The stack climbs the second sloped run until it enters into the pair of arms 14, which support the top product element, driving away the articulated pair of elements 92 and picking up the element that is missing. It is to be noted that, while descending, the rack 45 is governed by the shaft speed 40 by a series of toothed wheels 41, 55, 56, 58, 59 and the free-wheel 60, in same direction as the shaft. In the reclimb phase, such series of wheels reverse their drive and turn idle. Continuing to climb, the stack 5, with vertical movement equal to the horizontal movement of the arms 14, passes above the pair of articulated bearings 92 which support the top element already mentioned, thus determining the closing-in of the articulated bearings acted upon by the spring 94. The stack 5 then comes down to lean on the pairs of conical washers 93 or rollers 153 of the mentioned articulated bearings and is thus transported to the roller unit 24 for the discharge. The bracket 28 that has sent the stack away immediately returns to the initial loading position in order to receive the product element 18 which immediately follows, thus maintaining the continuous and synchronized operation without any interruptions. As to the details regarding the deviation towards the bottom of the single product elements 18 in the stack-forming, the following is observed (Figure 5, 7): the product element 18
by coming closer to the vertical/surface that passes by the
front face of the pair of rollers 114, (the element's back
edge comes closer to the surface, to be exact), and the respective face of the pair of counterbalances below, the
electro-valves, driving the cylinders 99, are induced so
as to raise the sloped pair of rollers 104, 106 with subsequent rotation of the articulated arms 92 in a way that
deprives the elements of such support. The element consequently comes down, guided at the back by the pair of rollers 114 and the pair of counterbalances 34 and also guided sidewise by the pair of vertical elastic foils 125. The
vertical front ranging is obtained by the end of the rods
118, sloped towards the back as a result of the return of
the shank 121 of the cylinder 120 appropriately started.
It is to be observed that the first tile 18 brings about
the horizontal position of the pair of articulated elements
126, normally sloped with the front end towards the top as
a result of the back counterbalance. In addition, in coming
down along the 45° sloped surface while the products are
coming down vertically, at the end of the stack-forming
operation, the bracket (28-32) allows the pair of articulated elements to be free to resume the sloped position
mentioned, thus determining, with the front edge, the
stop for the back edge of the base tile in the reclimb phase,
when the back counterbalance element 34 no longer touches
the stack. As for the supply, obtained through the lines
22, the following should be pointed out, with reference to
a row of products 18 (Figure 11, 12, 13): the head element
stops against the pair of teeth 135 of the articulated bearing 133, which drop to the front when a pair of teeth 23
of the chains 136 touches the front end of the lever 147,
thus allowing such element to pass the mentioned pair of
teeth 135 and continue then on the pair of belts 138. The
speed of the pair of belts 138 is considerable higher than
that of the pair of chains 136. In this way, the single
elements of the product 18 first go to the back faces of the pair of teeth 23 that are ahead, then, they are slowed down by the pair of side ledges 139 and they are joined and pushed by the pair of teeth 23 that are behind, synchronized with a pair of conveyor arms 14 that are travelling to reach the top guide section 20. The product elements 18 are thus automatically positioned at the center of the space bordered by consecutive pairs of elements 113. The tile following the head one, if not in phase with the respective pair of teeth 23 of the chains 136, is also stopped as a result of the difference in level between the pair of belts 137 and following pair of belts 138. The following describes the operation of the control device for the climb and descent movement of the brackets 28-32, in the variation described in Figures 15-16: when a product 18 is deposited on the surface of one of the brackets 28-32, the bracket lowers one pich equal to the thickness of the product, as a result of the timer control sent by the programming device, thus allowing the rack 45 to come down, pulled by the gravity.

The programming device picks up the parts of the clutch 154, 155 and disconnects them. As a stack 5 of products 18 forms on the bracket, the pitch lowering of the bracket along the sloped direction of the pair of internal bearing 2 determines first the closing-in, then the sliding of the back border of the products against the pair of respective counterbalance elements 34, as in the case of the device of the Figures 7 and 8. When only one product element is missing for the completion of stack 5, upon the arrival of the last element on the pair of arms 14, even the clutches 156-157 are picked up, thus bringing about the climb of the rack 45 and of the respective bracket, according the afore-mentioned sloped direction. The product stack 5 enters in the pair of arms 14, pushing away the pair of articulated bearing 92, and picking up the last product element. After this operation the others proceed as in the case of the device illustrated in the Figures 7 and 8. In real practice, the materials, the dimension, the procedure details may be different from those

- 19 - 0077304

that are indicated; however they are technically equivalent, without prejudicing the principles of the present invention. For example, the pair of conical washers 93 and the rollers 153 may be replaced in their function of bilaterally supporting the product elements 18 and the stacks 5 with supports or plates, even with a flat surface. In addition, the supply lines for the products 18, and consequently even the respective stacks 5, may transport even different products or different sizes and be of a different number than that indicated. It is to be noted that each series of brackets is a multiple stacking station, in which each bracket makes up an independent station for one line of products and for two rows.

CLAIMS

1. Sorting, distributing and stacking machine for ceramic and tile products characterized by the following components:
- a conveyor with a pair of chains (7) vertically placed in a closed circuit, connected between them by a transversal articulated bar to which are fixed like a cantilever, in the opposite direction of the drive, a series of product (18) conveyor arms (14), for the products that are guided along the circuit. The conveyor arms are interchageable and adjustable. on the transversal bar (13); the group of conveyor arms (14) which are mounted on a same articulated bar (13) defines an area (S) which may contain one or more products (18) or stacks of products (5) laid out on one or more lines or on one or more rows, depending on the size and on the dimensions of the products (18); - a series of brackets (28, 29, 30, 31, 32) that are movable towards the top and towards the bottom, along sloped surfaces of 45°. Each bracket makes up a stacking station of products (18), related to one line or to one or more rows of products (18). These brackets are adjustable and interchangeable on the cylindrical cross members (44) parallel to the mentioned articulated bars (13) and fixed to the frame of the machine. Each bracket (28-32) is positioned in between two conveyor arms (14). - one ore more supply lines (22) parallet to and synchronized with the conveyor, with the front part of each conveyor insertable between a pair of arms in the upper part of their run and which defines the passage between the ascending and the horizontal section above the run itself.

2. Machine described in the claim 1, characterized by what that said pair of chains (7) is driven and geared by four shafts (12, 10, 10, 10), laid out like the vertices of a parallelogram, with a top horizontal side that is offset with respect to the lower one in the direction of the product (8) drive. These shafts are mounted and rotate within the end bearings (3, 4) at a 45° slope, like the smaller side of the same parallelogram.

3. Machine, described in the claim 1 and 2, characterized by the fact that an external pair of conveyor arms (14) of each series mounted on the articulated bars (13) slides within the bearing onto which it is mounted thanks to two pairs of side guides, one at the top (19, 20, 21) and one at the bottom (17, 15, 16). Each guide of the bottom pair is made up of a section (17) that is inclined towards the bottom in the direction of the movement of the arms, and it is followed by a straight, horizontal section (15) that ends in an "S" shaped section (16). Each pair of upper guides is formed by a rectilinear section (19) sloped towards the top in the direction of the movement of the conveyor arms, followed by a horizontal rectilinear section (20) and by a section (21) sloped towards the bottom.

4. Machine, described in the claims 1 and 2, characterized by the fact that each conveyor arm (14) provided with a head (86) fixed to the articulated bar (13) by a screw (87) is equipped with a pair of upper slopings (85) above a longitudinal core (88) on whose flanks are fixed four pairs of dolly blocks facing each other longitudinally and at an equal distance, and whose indented lower part slides between the pair of sheets (71), fixed to the cross member (69) of the machine frame. A pin (91) protrudes longitudinally from every dolly block of a pair of dolly blocks facing each other. An articulated bearing (92) is hinged to the pin. The bearing has a profiled section. Each bearing is provided with, at the top, a pair of rollers (153) or conical washers (93) which serve to support from the bottom one of the side edges of one of the product (18) elements or of the lower element of a product stack (5). The other edge of the product (18) element or of the stack (5) is supported by the corresponding pair of rollers or conical washers belonging to the contiguous conveyor arm (14). A pair of springs (94), inserted in a pair of laterally protruding pegs (95) of the core keep the upper part of each articulated bearing (92) pushed towards the outside. From the head of each bearing (92) protrudes a sliding peg (96) on an arched slot (97) inserted in the corresponding head of each dolly block (89).

- 22 -

0077304

5. Machine, described in the claims 1, 2 and 4 characterized by the fact that each pair of sheets (71) is interconnected by a flat horizontal element (98) that supports at the bottom a pair of vertical pneumatic cylinder operators (99) whose upper shank (100) acts on the longitudinal levers (101) hinged to the pins (102) located at the upper end of the support columns (103) fixed on the flat element (98). Each longitudinal lever (101) is provided with a pin (105, 107) near the end. One is sloped to the right towards the top, the other to the left towards the top. Each pin is provided with a roller (106, 109). The articulated bearing (92) of the arm (14) that proceeds in the direction of the movement is provided with a notch (108) at the front, on the lower end.

6. Machine described in the preceeding claims, characterized by the fact that each of the cylindrical cross members (44) on which are mounted the series of brackets (28-32) are fixed to a pair of middle side supports (2) sloped at 45° to the front in the direction of the drive of the products (18). The middle lateral supports, together with the end supports (3-4) are connected at the bottom to the bed-plate (1) of the machine and at the top to a pair of flanks (6). At the top of the cross members (44) the cylindrical cross members (69) of the guide supports (71) of the conveyor arms (14) are fixed to the middle lateral supports (2).

7. Machine described in claim 6, characterized by the fact that every bracket of each series (28-32) is fixed in a cantilever position and horizontally to the back at the top of a plate (33) parallel to the middle bearings (2) which slide between four pairs of transversal rollers (46) whose pins are fixed to a pair of flanks (43). Even if these flanks are sloped like the mentioned supports and are located to the back of such plate, to the sides of the projection, towards the bottom of the same bracket. This pairs of flanks is fixed with clamp (MO) in a transversal and angularly adjustable manner from the respective cylindrical cross member (44). A bottom cross member (66) of the respective pair of middle supports (2) is inserted in a lower notch of the pair of flanks (43) to support it from the bottom. On the lower face of the plate (33) is a rack (43), longitudinally fixed that is geared with the idle cylindrical toothed wheel (41) on a splined sleeve (42) which rotates in the mounting of the respective middle bearings (2), below the cross member (44).

8. Machine described in claims 6 and 7, characterized by the fact that on the lower part of each middle support a rotating shaft (36) is mounted. A pair of toothed wheels (35) are close-fitted on the shaft and are geared with the pair of chains (7) underneath it. These wheels transmit the drive to the appropriate splined shaft (40) by a toothed pulley (37, 39) and a toothed belt (38).

9. Machine, described in claims 6, 7, 8, characterized by the fact that on the splined sleeve (42) an electromagnetic clutch, mounted sidewise, is composed of a fixed part (49) that shares the same axis as the sleeve, a disc (51) that slides on the sleeve, and on the opposite side of the fixed part (49), an internal ring bevel gear (52), geared with a clearance of a few degrees (7° for example) to the internal ring (53) fixed to a disc (54). In its turn, the disc is fixed on the side of the cylindrical toothed wheel (41). The ring (53) drives the outer bevel gear (55), geared on the opposite side to the rack (45), with a second bevel gear (56) mounted on the end of the auxiliary shaft (57) perpendicular to the splined shaft (40). This auxiliary shaft rotates within the bearing in the casing (48) that connects the flanks (43) and it is interrupted at the top by the passage of the rack (45). A third bevel gear, mounted on the same axle which is on the outside of the wheel (56), is geared to a fourth bevel gear (59) mounted on a free-wheel (60), whose internal ring is close-fitted on the sleeve (42), on the opposite side of that of the electro-magnetic clutch. A magnetizable ferro-magnetic body (62) mounted on the same axle        on the outside of the auxiliary shaft (57), which rotates within the bearing and the casing, is provided with a cavity (64') in which is lodged a disc brake. The

disc (61) of such brake, which is close-fitted on the outside end of the auxiliary shaft (57), is coupled on the side of side ferro-magnetic body, with the ferro-magnetic disc (63) against the spring.action (64) while on the opposite side, a disc (65), adjustable on the axle thanks to a net cover (65'), is coupled to the shaft.

10. Machine described in the claims 6, 7, 8, characterized by the fact that between the flanks (43) and the toothed wheel (41) around the splined sleeve (42) is inserted an electro-magnetic clutch made up of four parts (154, 155, 156 and 157). The first two parts (154, 156) are fixed on the toothed wheel (51), the third part (155) is fixed on one of the flanks (43) and the fourth part (157) is close-fitted on the splined sleeve (42) near the flank (43), facing that which is fixed to the third part (155) of the clutch.

11. Machine described in the claim 10, characterized by the fact that on the shaft (36), a cam (159) with two protrusions facing each other is close-fitted on the inner side of the toothed pulley (37); a roller (160) whose pin is transversally fixed to the lower end of an arm (16), connected to an idle coller on the splined shaft (40)is kept pressed to the peripheral surface of such cam. A vertical bearing (163) fixed perpendicularly to the arm, is provided with a pair of end rollers (164) whose inner surfaces roll on the smooth external surfaces of the toothed belt (38), thus alternatively determining the tension of one of the two sections of the belt.

12. Machine described in claims 1 and 3, characterized by the fact that the cylindrical ends (75) of each articulated bar (13) are coupled to a pair of vertical elements (74) fixed on the internal side of each chain (7). Each of the vertical elements are provided at the bottom, of a roller (73) that rolls on the guides (17, 15, 16, 19, 20, 21) of the conveyor arm (14). The upper section of the pair of chains slides between the two guides; one upper (77) and the other lower (76), which are kept pressed to the chains (7) thanks to longitudinal angle irons (78). These angle irons and the lower guides are fixed to pairs of "U" -sec-

- 25 -

0077304

tion longitudinal members (72) resting on the cross members (69).

13. Machine described in claims 6 and 7, characterized by the fact that with every bracket of the series 28-32 there is a front pair of tailpieces (115) belonging to the pair of side guides (71). Each of the vetical tailpieces is provided at the bottom, with a hinge (116) to which is connected a bearing (117), and to the front of which a rod sloped to the back (118) is fixed. At the top, the rod is provided with a knob (119). The bearing is articulated by a pneumatic operator cylinder (120), and the shank (121) that rotates the bearing towards the bottom, against the action of the spring (122). Two counterbalances elements (34) provided with stress raiser rollers (114) are mounted to a pair of back vertical tailpieces (124) of the lateral guides (71). Two pairs of elastic vertical foils are mounted to the pairs of vertical tailpieces (115, 124).

14. Machine, described in claim 9, characterized by the fact that on each pair of conveyor arms (14) the boundry elements of each product (18) stacking station are bilaterally inserted. These boundary elements are adjustable and are provided with upper and lower stress raisers. The distance between the two boundary elements (113) belonging to the two successive conveyor arms (14) is slightly greater than the longitudinal dimensions of the products (18).

16. Machine described in claim 1 and 2, characterized by the fact that one or more supply lines (22) of the products (18) are mounted to a frame (149), on which is mounted a splined rotating shaft (143) driven by the speed of the motovariator (8) that drives the shaft (12) of the pair of chains (7) of the conveyor. For each supply line, a pair of toothed wheels for a pair of conveyor chains (136) is close-fitted to the splined shaft extending to the inside of the defined space by the passage of two contiguous conveyor arms (14) and a pair of double pulleys (P), on the outside of the pair of toothed wheels. The pair of conveyor chains (136)is provided with peripheral drive teeth (23) inserted and spaced an interval slightly greater than the length of the product element (18). The pair of double pulleys (P) drives a pair of belts (137) extending to the back with regards to the product movement (18) and it folds around a pair of pulleys (P1) and a second pair of belts (138) extending to the front until the end of the conveyor arms (14), folded around a pair of pulleys (P2). The diameter of the pulleys (P1) is greater than that of the toothed wheels of the conveying chains (136), but it is smaller than that of the pulleys (P2). The flat surface of the top section of the pair of belts (137) is lower than the flat surface of the top section of the pair of belts (138). The difference in level between the two surfaces is approximately half that of the product thickness (18). Inside the pair of belts, slightly under the surface of their top section, is located a pair of longitudinal bearing (133) which are elastically articulated as a result of the pair of springs placed beneath them. These longitudinal bearings are provided with, at the nack, a pair of hinges (134) and to the front, a pair of stop teeth (135) for the products (18). Under the front part of such pairs of longitudinal bearings, in the space between the position of the pair of teeth (135) and the back end of a pair of chains (136) is a lever (147) whose fulcrum is the frame (149) of the supply lines (22). The top end of such lever interferes with the drive teeth (23) while its lower end drives the top connecting rod, connected to the pair of longitudinal bearings (133). A pair of braking ledges (139), fixed to the frame (149) is placed side by side with the pair of chains (136) and are on the same plane as the that of the top section of the chains.

Fig.1

Fig.2

Fig.3

Fig.4

0077304 3/14

Fig.5

Fig.6

Fig.7

Fig.8

Fig.9

Fig.10

Fig.11

Fig.12

Fig.13

0077304
11/14

Fig.14

Fig.15

Fig.16